# EUROPÄISCHE PATENTSCHRIFT

(11) **EP 2 041 422 B1**
(45) Veröffentlichungstag und Bekanntmachung des Hinweises auf die Patenterteilung: **21.03.2018**
(21) Anmeldenummer: 07787269.5
(22) Anmeldetag: 09.07.2007
(51) Int. Cl.: F02M 37/10

(54) **KRAFTSTOFF-FÖRDEREINHEIT**
FUEL DELIVERY UNIT
UNITÉ D'ALIMENTATION EN CARBURANT

(30) Priorität: 11.07.2006 DE 102006032100
(43) Veröffentlichungstag der Anmeldung: 01.04.2009
(73) Patentinhaber: Continental Automotive GmbH, 30165 Hannover (DE)
(72) Erfinder: ECK, Karl, 60318 Frankfurt (DE); HAGIST, Dieter, 56112 Lahnstein (DE); KADLER, Matthias, 64521 Gross-gerau (DE); MAASZ, Martin, 65843 Sulzbach (DE); SCHÖNERT, Oliver, 59757 Arnsberg (DE); TEICHERT, Michael, 65824 Schwalbach (DE)
(86) Internationale Anmeldenummer: PCT/EP2007/056993
(87) Internationale Veröffentlichungsnummer: WO 2008/006810

(56) Entgegenhaltungen:
- EP-A- 1 553 285
- FR-A- 2 768 777
- FR-A- 2 876 420
- US-A- 1 933 117
- US-A- 3 900 223
- US-A- 4 846 506
- US-A- 5 415 146
- US-A- 5 584 988
- US-B1- 6 637 464

## Beschreibung

Die Erfindung betrifft eine Kraftstoff-Fördereinheit eines Kraftfahrzeuges mit einem Schwalltopf und mit einem ein Filterelement aufweisenden Vorfilter zur Filterung des in den Schwalltopf einströmenden Kraftstoffs.
Fördereinheiten mit solchen Schwalltöpfen werden in heutigen Kraftfahrzeugen häufig eingesetzt und sind aus der Praxis bekannt. Bei bekannten Fördereinheiten wird der Schwalltopf mit dem Filterelement des Vorfilters verbunden. Soll eine entsprechend große Filterleistung des Vorfilters gewährleistet sein, wird ein entsprechend großes Filterelement des Vorfilters eingesetzt. Nachteilig bei der bekannten Kraftstoff-Fördereinheit ist, dass das Vorrätighalten verschiedener Filterelemente sehr kostenintensiv ist.

FR 2 768 777 A beschreibt eine Kraftstoff-Fördereinheit gemäß dem Oberbegriff des Anspruchs 1.

US 1 933 117 A beschreibt eine Kupplung zur Verbindung zweier Rohrenden wobei beim Einstecken eine im Anschlussstutzen umlaufende Rille aufgebrochen wird. Der Erfindung liegt das Problem zugrunde, eine Kraftstoff-Fördereinheit der eingangs genannten Art so weiterzubilden, dass sie besonders kostengünstig auf vorgesehene Filterleistungen angepasst werden kann.

Dieses Problem wird erfindungsgemäß durch eine Kraftstoff-Fördereinheit gemäß dem Anspruch 1 gelöst. Durch diese Gestaltung kann die erfindungsgemäße Kraftstoff-Fördereinheit neben dem Filterelement mit dem Zusatzfilterelement ausgestattet werden. Das Filterelement weist vorzugsweise für die meisten Anwendungsfälle eine ausreichende Filterfläche auf. Wenn eine besonders große Filterleistung des Vorfilters gewährleistet sein soll, kann an dem Anschlussstutzen das Zusatzfilterelement montiert werden. Daher lässt sich die erfindungsgemäße Kraftstoff-Fördereinheit besonders kostengünstig auf die vorgesehene Filterleistung anpassen.

Die erfindungsgemäße Kraftstoff-Fördereinheit gestaltet sich besonders kompakt, wenn der Träger und eine den Schwalltopf verschließende Bodenplatte eine Sammelkammer zum Sammeln des vorgefilterten Kraftstoffs begrenzen, wenn ein Ansauganschluss einer Kraftstoffpumpe mit der Sammelkammer verbunden ist und wenn der Anschlussstutzen in das Innere des Schwalltopfes ragt.

Der Träger könnte beispielsweise als geschlossene Wand mit mehreren Anschlussstutzen ausgebildet sein. Das Filterelement könnte dabei wie das Zusatzfilterelement ausgebildet und auf einem der Anschlussstutzen montiert sein. Die erfindungsgemäße Kraftstoff-Fördereinheit gestaltet sich besonders kompakt, wenn das Filterelement als Teilbereich des Trägers ausgebildet ist. Durch diese Gestaltung weist der Schwalltopf zumindest das als Teilbereich des Trägers ausgebildete Filterelement auf. Wenn die Filterfläche vergrößert werden soll, wird ein oder mehrere weitere Zusatzfilterelemente an dem oder den entsprechenden Anschlussstutzen montiert.

Der Vorfilter weist gemäß einer anderen vorteilhaften Weiterbildung der Erfindung eine besonders große Filterfläche auf, wenn das Filterelement an den zumindest einen Anschlussstutzen angrenzt.

Die Montage des Vorfilters gestaltet sich gemäß einer anderen vorteilhaften Weiterbildung der Erfindung besonders einfach, wenn das Filterelement stoffschlüssig mit dem Schwalltopf und/oder dem Träger verbunden ist. Durch diese Gestaltung weist der Schwalltopf im Grundzustand zumindest ein einziges Filterelement auf und kann bei Bedarf durch die Montage des Zusatzfilterelementes an dem Anschlussstutzen mit einer besonders großen Oberfläche versehen werden.

Das an dem Anschlussstutzen zu montierende Zusatzfilterelement gestaltet sich gemäß einer anderen vorteilhaften Weiterbildung der Erfindung besonders kompakt, wenn das zur Montage an dem Anschlussstutzen vorgesehene Zusatzfilterelement einen Stutzen und ein von dem Stutzen abstehendes Filtergewebe hat und wenn das Filtergewebe sackförmig gestaltet ist. Das sackförmige Filtergewebe kann beispielsweise aus einem schlauchförmigen Filtergewebe erzeugt werden, indem an einem Ende des schlauchförmigen Filtergewebes der Stutzen angeschlossen ist und das andere Ende verschlossen ist.

Der auf dem Träger montierte Vorfilter weist gemäß einer anderen vorteilhaften Weiterbildung der Erfindung eine hohe Stabilität auf, wenn der Anschlussstutzen den Stutzen des aufgesteckten Zusatzfilterelementes umschließt. Weiterhin vermag der Stutzen des Zusatzfilterelementes den geöffneten Anschlussstutzen abzudichten.

Zur Vereinfachung der Montage des Zusatzfilterelementes trägt es gemäß einer anderen vorteilhaften Weiterbildung der Erfindung bei, wenn der Anschlussstutzen rohrförmig von dem Träger absteht und wenn der Träger innerhalb des Anschlussstutzens eine zumindest teilweise umlaufende Rille als Sollbruchstelle aufweist. Durch diese Gestaltung wird bei der Montage das Zusatzfilterelement in den Anschlussstutzen gedrückt, bis der Stutzen den Träger an der umlaufenden Rille aufbrechen kann. Anschließend steckt der Stutzen des Zusatzfilterelementes in dem Anschlussstutzen und dichtet diesen ab. Vorzugsweise weist der Stutzen eine Kante zum Aufbrechen der Sollbruchstelle auf. Damit lässt sich das Zusatzfilterelement ohne Werkzeug montieren.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Teilschnitt durch eine erfindungsgemäße Kraftstoff-Fördereinheit,
- Fig. 2: schematisch einen Längsschnitt durch einen Schwalltopf mit einem Vorfilter der erfindungsgemäßen Kraftstoff-Fördereinheit aus Figur 1,
- Fig. 3: eine stark vergrößerte Darstellung eines Teilbereichs des Vorfilters aus Figur 2 im Bereich eines Zusatzfilters,
- Fig. 4: eine stark vergrößerte Darstellung eines Teilbereichs des Vorfilters aus Figur 2 im Bereich eines verschlossenen Anschlussstutzens.

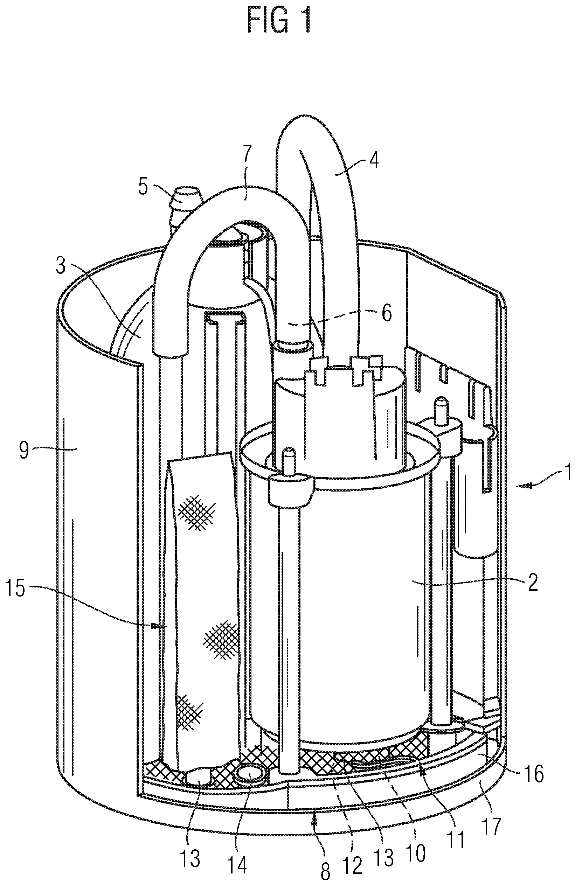

Figur 1 zeigt eine in einem nicht dargestellten Kraftstoffbehälter eines Kraftfahrzeuges anzuordnende Fördereinheit und zum Fördern von Kraftstoff zu einer ebenfalls nicht dargestellten Brennkraftmaschine des Kraftfahrzeuges. Die Fördereinheit hat eine in einem Schwalltopf 1 angeordnete, elektromotorisch angetriebene Kraftstoffpumpe 2 und einen Feinfilter 3. Der Feinfilter 3 ist ebenfalls in dem Schwalltopf 1 angeordnet und über eine Kraftstoffleitung 4 mit der Kraftstoffpumpe 2 verbunden. Weiterhin hat der Feinfilter 3 einen Vorlaufanschluss 5 für eine zu der Brennkraftmaschine des Kraftstoffbehälters führende Vorlaufleitung. An einem Anschluss 6 der Kraftstoffpumpe 2 ist eine Leitung 7 für eine nicht dargestellte Saugstrahlpumpe angeschlossen. Die Saugstrahlpumpe saugt Kraftstoff aus der Umgebung des Schwalltopfes 1 an und fördert diesen in den Schwalltopf 1. Der Schwalltopf 1 dient zum Sammeln des Kraftstoffs und hat eine Bodenplatte 8 und einen mit der Bodenplatte 8 dichtend verbundenen Mantel 9. Ein Ansauganschluss 10 der Kraftstoffpumpe 2 ragt durch einen Vorfilter 11 in eine zwischen der Bodenplatte 8 und dem Vorfilter 11 angeordnete Sammelkammer 12. Der Vorfilter 11 weist ein mit dem Mantel 9 des Schwalltopfes 1 stoffschlüssig und dichtend verbundenes, ebenes Filterelement 19 auf und hat zwei Anschlussstutzen 13, 14. An einem der Anschlussstutzen 13 ist ein Zusatzfilterelement 15 angeschlossen, während der andere Anschlussstutzen 14 dicht verschlossen ist.

In den Schwalltopf 1 einströmender Kraftstoff gelangt über den Vorfilter 11 in die Sammelkammer 12 und damit zu dem Ansauganschluss 10 der Kraftstoffpumpe 2. Damit vermag die Kraftstoffpumpe 2 vorgefilterten Kraftstoff aus dem Schwalltopf 1 anzusaugen und über den Feinfilter 3 zu dem Vorlaufanschluss 5 für die Vorlaufleitung zu fördern. Der Mantel 9 des Schwalltopfes 1 hat einen über einen Stützrand 16 der Bodenplatte 8 greifenden Rand 17. Der Rand 17 und der Stützrand 16 sind dichtend miteinander verbunden.

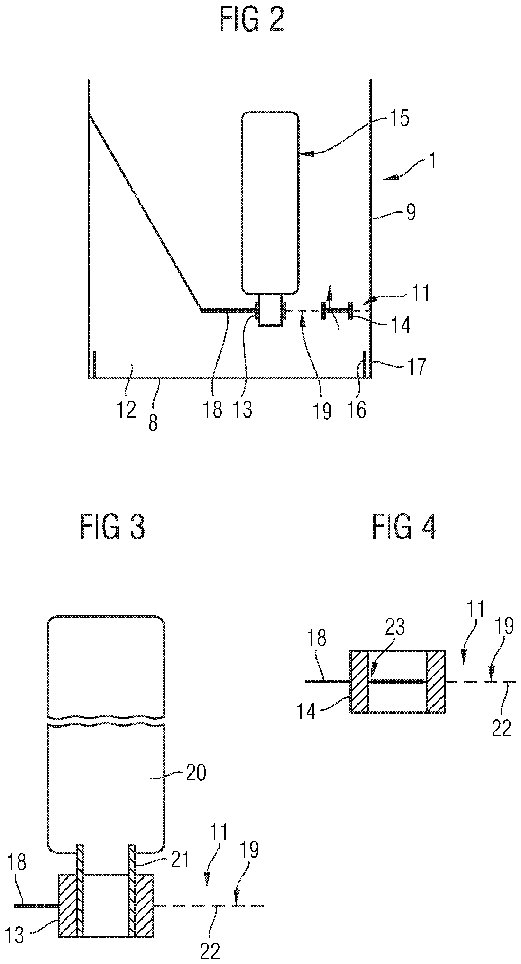

Figur 2 zeigt schematisch eine Schnittdarstellung durch den Schwalltopf 1 mit dem Vorfilter 11 aus Figur 1. Zur Vereinfachung der Zeichnung sind übrige Bauteile, wie die Kraftstoffpumpe 2 und der Feinfilter 3 in Figur 2 nicht dargestellt. Der Vorfilter 11 weist einen Träger 18 zur Halterung der Anschlussstutzen 13, 14 auf und haltert das ebene Filterelement 19 und das Zusatzfilterelement 15. Weiterhin begrenzen der Träger 18 mit dem Filterelement 19 und dem Zusatzfilterelement 15 zusammen mit der Bodenplatte 8 die Sammelkammer 12.

Figur 3 zeigt stark vergrößert das in einem der Anschlussstutzen 13 des Vorfilters 11 aufgesteckte Zusatzfilterelement 15. Das Zusatzfilterelement 15 weist ein sackförmiges Filtergewebe 20 mit einem Stutzen 21 auf, welcher in einen der Anschlussstutzen 13 des Trägers 18 eingesteckt ist. Damit umschließt der Anschlussstutzen 13 des Trägers 18 den Stutzen 21 des Zusatzfilterelementes 15. Ein Filtergewebe 22 des auf dem Träger 18 angeordneten Filterelementes 19 grenzt an den Anschlussstutzen 13 an.

Figur 4 zeigt den dicht verschlossenen Anschlussstutzen 14 mit angrenzenden Bereichen des Vorfilters 11. Auf diesem Anschlussstutzen 14 lässt sich zur Vergrößerung der Filterfläche des Vorfilters 11 ebenfalls ein wie das in Figur 3 dargestellte Zusatzfilterelement 15 aufstecken. Der Anschlussstutzen 14 weist eine umlaufende Rille 23 als Sollbruchstelle auf. Beim Aufstecken des Zusatzfilterelementes 15 wird die umlaufende Rille 23 aufgebrochen. Das Zusatzfilterelement 15 ist damit, wie in Figur 3 dargestellt, dicht auf dem Anschlussstutzen 13 gehalten.

Im Grundzustand nach der Fertigung des Vorfilters 11 sind die Anschlussstutzen 13, 14, wie der aus Figur 4, dicht verschlossen. Der Vorfilter 11 weist damit ausschließlich die von dem Filtergewebe 22 des ebenen Filterelementes 19 gebildete Filterfläche auf. Wenn der Vorfilter 11 mit einer vergrößerten Filterfläche ausgestattet werden soll, wird auf einem oder auf den beiden Anschlussstutzen 13, 14 das Zusatzfilterelement 15 aufgesteckt. Damit kann mit einer großen Anzahl an Gleichteilen die Filterfläche entsprechend der Anzahl der vorgesehenen Anschlussstutzen 13, 14 auf dem Träger 18 angepasst werden.

## Patentansprüche

1. Kraftstoff-Fördereinheit eines Kraftfahrzeuges mit einem Schwalltopf und mit einem ein Filterelement aufweisenden 5 Vorfilter zur Filterung des in den Schwalltopf einströmenden Kraftstoffs, wobei der Vorfilter (11) einen Träger (18) mit zumindest einem im Grundzustand verschlossenen Anschlussstutzen (13, 14) zur Montage eines Zusatzfilterelementes (15) aufweist, **dadurch gekennzeichnet, dass** ein auf den Anschlussstutzen (13, 14) bedarfsweise aufsteckbares Zusatzfilterelement (15) eine Filterfläche des Filterelements entsprechend vergrößert, indem es den Anschlussstutzen beim Aufstecken aufbricht.

2. Kraftstoff-Fördereinheit nach Anspruch 1, **dadurch gekennzeichnet, dass** der Träger (18) und eine den Schwalltopf (1) verschließende Bodenplatte (8) eine Sammelkammer (12) zum Sammeln des vorgefilterten Kraftstoffs begrenzen, dass ein Ansauganschluss (10) einer Kraftstoffpumpe (2) mit der Sammelkammer (12) verbunden ist und dass der Anschlussstutzen (13, 14) in das Innere des Schwalltopfes (1) ragt.

3. Kraftstoff-Fördereinheit nach Anspruch 1 oder 2, **dadurch gekennzeichnet, dass** das Filterelement (19) als Teilbereich des Trägers (18) ausgebildet ist.

4. Kraftstoff-Fördereinheit nach zumindest einem der vorhergehenden Ansprüche, **dadurch gekennzeichnet, dass** das Filterelement (19) an den zumindest einen Anschlussstutzen (13, 14) angrenzt.

5. Kraftstoff-Fördereinheit nach zumindest einem der vorhergehenden Ansprüche, **dadurch gekennzeichnet, dass** das Filterelement (19) stoffschlüssig mit dem Schwalltopf (1) und/oder dem Träger (18) verbunden ist.

6. Kraftstoff-Fördereinheit nach zumindest einem der vorhergehenden Ansprüche, **dadurch gekennzeichnet, dass** ein Zusatzfilterelement (15) zur Montage an dem Anschlussstutzen (13, 14) vorgesehen ist, welches einen Stutzen (21) und ein von dem Stutzen (21) abstehendes Filtergewebe (20) hat, wobei das Filtergewebe (20) sackförmig gestaltet ist.

7. Kraftstoff-Fördereinheit nach zumindest einem der vorhergehenden Ansprüche, **dadurch gekennzeichnet, dass** der Anschlussstutzen (13, 14) den Stutzen (21) des aufgesteckten Zusatzfilterelementes (15) umschließt.

8. Kraftstoff-Fördereinheit nach zumindest einem der vorhergehenden Ansprüche, **dadurch gekennzeichnet, dass** der Anschlussstutzen (13, 14) rohrförmig von dem Träger (18) absteht und dass der Träger (18) innerhalb des Anschlussstutzens (13, 14) eine zumindest teilweise umlaufende Rille (23) als Sollbruchstelle aufweist.

## Claims

1. Fuel delivery unit of a motor vehicle, with a swirl pot and with a prefilter which has a filter element and is intended for filtering the fuel flowing into the swirl pot, wherein the prefilter (11) has a support (18) with at least one connection piece (13, 14), which is closed in the basic state, for the installation of an additional filter element (15), **characterized in that** an additional filter element (15) which can be plugged onto the connection piece (13, 14) if the need arises correspondingly enlarges a filter surface of the filter element by said additional filter element breaking open the connection piece as it is being plugged thereon.

2. Fuel delivery unit according to Claim 1, **characterized in that** the support (18) and a base plate (8) closing the swirl pot (1) delimit a collecting chamber (12) for collecting the prefiltered fuel, **in that** an intake connection (10) of a fuel pump (2) is connected to the collecting chamber (12), and **in that** the connection piece (13, 14) protrudes into the interior of the swirl pot (1).

3. Fuel delivery unit according to Claim 1 or 2, **characterized in that** the filter element (19) is designed as a partial region of the support (18).

4. Fuel delivery unit according to at least one of the preceding claims, **characterized in that** the filter element (19) is adjacent to the at least one connection piece (13, 14).

5. Fuel delivery unit according to at least one of the preceding claims, **characterized in that** the filter element (19) is connected to the swirl pot (1) and/or to the support (18) with a cohesive material joint.

6. Fuel delivery unit according to at least one of the preceding claims, **characterized in that** an additional filter element (15) is provided for installation on the connection piece (13, 14), which additional filter element has a connector (21) and a filter fabric (20) protruding from the connector (21), wherein the filter fabric (20) is of bag-shaped design.

7. Fuel delivery unit according to at least one of the preceding claims, **characterized in that** the connection piece (13, 14) surrounds the connector (21) of the attached additional filter element (15).

8. Fuel delivery unit according to at least one of the preceding claims, **characterized in that** the connection piece (13, 14) protrudes in the shape of a tube from the support (18), and **in that** the support (18) has an at least partially encircling groove (23) as a predetermined breaking point within the connection piece (13, 14).

## Revendications

1. Unité d'alimentation en carburant d'un véhicule automobile avec un pot d'accumulation et avec un préfiltre présentant un élément de filtre pour le filtrage du carburant arrivant dans le pot d'accumulation, dans lequel le préfiltre (11) présente un support (18) avec un embout de raccordement (13, 14) fermé dans un état de base pour le montage d'un élément de filtre supplémentaire (15), **caractérisée en ce qu'**un élément de filtre supplémentaire (15) pouvant si nécessaire être connecté à l'embout de raccordement (13, 14) agrandit de façon correspondante la face de filtre de l'élément de filtre, par le fait qu'il rompt l'embout de raccordement lors de la connexion.

2. Unité d'alimentation en carburant selon la revendication 1, **caractérisée en ce que** le support (18) et une plaque de fond (8) fermant le pot d'accumulation (1) limitent une chambre d'accumulation (12) destinée à accumuler le carburant préfiltré, **en ce qu'**un raccord d'aspiration (10) d'une pompe à carburant (2) est raccordé à la chambre d'accumulation (12) et **en ce que** l'embout de raccordement (13, 14) pénètre à l'intérieur du pot d'accumulation (1).

3. Unité d'alimentation en carburant selon la revendication 1 ou 2, **caractérisée en ce que** l'élément de filtre (19) est formé par une région partielle du support (18).

4. Unité d'alimentation en carburant selon au moins une des revendications précédentes, **caractérisée en ce que** l'élément de filtre (19) est adjacent audit au moins un embout de raccordement (13, 14).

5. Unité d'alimentation en carburant selon au moins une des revendications précédentes, **caractérisée en ce que** l'élément de filtre (19) est assemblé par une liaison matérielle au pot d'accumulation (1) et/ou au support (18).

6. Unité d'alimentation en carburant selon au moins une des revendications précédentes, **caractérisée en ce qu'**il est prévu un élément de filtre supplémentaire (15) à monter sur l'embout de raccordement (13, 14) et qui comporte un embout (21) et un tissu de filtre (20) partant de l'embout (21), dans laquelle le tissu de filtre (20) est réalisé en forme de sac.

7. Unité d'alimentation en carburant selon au moins une des revendications précédentes, **caractérisée en ce que** l'embout de raccordement (13, 14) entoure l'embout (21) de l'élément de filtre supplémentaire connecté (15).

8. Unité d'alimentation en carburant selon au moins une des revendications précédentes, **caractérisée en ce que** l'embout de raccordement (13, 14) sort sous forme tubulaire hors du support (18) et **en ce que** le support (18) présente à l'intérieur de l'embout de raccordement (13, 14) une rainure (23) au moins partiellement périphérique constituant un point de rupture théorique.
